# EUROPEAN PATENT SPECIFICATION

(11) **EP 3 457 315 B1**
(45) Date of publication and mention of the grant of the patent: **08.06.2022**
(21) Application number: 17840846.4
(22) Date of filing: 16.06.2017
(51) Int. Cl.: G06K 9/00, G06F 1/16, H04M 1/02

(54) **FINGERPRINT MODULE AND MOBILE TERMINAL HAVING SAME**
FINGERABDRUCKMODUL UND MOBILES ENDGERÄT DAMIT
MODULE D'EMPREINTE DIGITALE ET TERMINAL MOBILE LE COMPRENANT

(30) Priority: 16.08.2016 CN 201620890788 U; 16.08.2016 CN 201610678006
(43) Date of publication of application: 20.03.2019
(73) Proprietor: GUANGDONG OPPO MOBILE TELECOMMUNICATIONS CORP., LTD., Wusha, Chang'an Dongguan, Guangdong 523860 (CN)
(72) Inventor: YU, Weibin, Dongguan Guangdong 523860 (CN); HUANG, Maozhao, Dongguan Guangdong 523860 (CN); YANG, Mao, Dongguan Guangdong 523860 (CN)
(74) Representative: Manitz Finsterwald Patent- und Rechtsanwaltspartnerschaft mbB
(86) International application number: PCT/CN2017/088769
(87) International publication number: WO 2018/032870

(56) References cited:
- EP-A1- 3 399 383
- CN-A- 105 373 778
- CN-A- 105 404 881
- CN-A- 105 825 165
- CN-A- 106 203 404
- CN-U- 205 375 368
- CN-U- 206 178 867
- US-A1- 2015 014 141

## Description

### TECHNICAL FIELD

The present disclosure relates to electronic devices and in particular to a mobile terminal and a fingerprint module thereof.

### BACKGROUND

In the related art, mobile terminals such as mobile phones are gradually becoming thinner. However, the thickness of the mobile terminal such as mobile phone is relative large.

EP3399383A1 discloses a mobile terminal, comprising: a fingerprint recognition module and a terminal screen; said terminal screen comprising a display area and a non-display area positioned at one end of the display area, wherein said display area has a display panel; said fingerprint recognition module is close to said non-display area, wherein a forward facing projection of said fingerprint recognition module on a flat surface of said display panel at least partly overlaps with a forward facing projection of the non-display area on the flat surface of said display panel. The present invention is thus able to resolve the problem wherein a frame of a mobile terminal is excessively large when a fingerprint recognition module is positioned on the front of the mobile terminal, which would not only cause the overall dimensions to be increased, but also the outer appearance of the mobile terminal to be affected.

An embodiment of CN205375368U provides an input apparatus for a portable electronic device, comprising: a fingerprint sensor module; and a complex sensor. The fingerprint sensor module comprises: a bracket; a fingerprint sensor, disposed on the upper side of the bracket, having a sensing unit formed on a flexible substrate and a sensor circuit unit electrically connected to the sensing unit; and a coating layer positioned on the upper side of the finger sensor.

CN105825165A discloses a fingerprint identification module, a terminal device and an assembling method, and relates to the design field of the fingerprint module of the terminal device. The invention aims to solve the stack design problem of the structure of the terminal device due to the fact that the internal structural space of the terminal device is occupied by one part of the fingerprint identification module in the prior art. The fingerprint identification module comprises a fingerprint chip, a fingerprint cover plate, a flexible circuit board, a reinforcing plate and a decorative ring arranged at the periphery of the fingerprint chip. The first connection part of the decorative ring is connected with the first end of the fingerprint chip and is also in contact connection with the fingerprint cover plate. The second connection part of the decorative ring is connected with the second end of the fingerprint chip and is also in contact connection with the fingerprint cover plate. Meanwhile, the second connection part of the decorative ring is fixedly connected with the reinforcing plate. The present invention also provides a terminal device and an assembling method. According to the technical scheme of the invention, the second connection part of the decorative ring is fixedly connected with the reinforcing plate. Therefore, fingerprint identification module becomes thinner in thickness. The internal structural space of the terminal device is saved when the fingerprint identification module is installed through being matched with the terminal device.

### SUMMARY OF THE DISCLOSURE

The present disclosure aims to solve one of the technical problems in the relevant technology at least to some degree. The invention is defined by the independent claim. Thus, the present disclosure provides a fingerprint module, which has the advantage of thinner thickness.

The present disclosure further provides a mobile terminal, which includes the above fingerprint module.

According to an embodiment of the present disclosure, the fingerprint module is according to claim 1.

According to an embodiment of the present disclosure, the mobile terminal may include the above fingerprint module.

### BRIEF DESCRIPTION OF THE DRAWINGS

FIG. 1 is a schematic view of the fingerprint module according to the embodiment of the present disclosure.
FIG. 2 is an exploded view of the fingerprint module according to the embodiment of the present disclosure.
FIG. 3 is an exploded view of the fingerprint module according to the embodiment of the present disclosure.
FIG. 4 is a cross-sectional view of the fingerprint module according to the embodiment of the present disclosure.

### List of reference numbers in drawings:

fingerprint module 100,
encapsulation layer 1, protruding portion 11,
decorative part 2, embedded groove 21, recess portion 22, through hole 23, mounting slot 24, sealing groove 25,
circuit board assembly 3, flexible circuit board 31, reinforcing plate 32,
conductive component 4, cover plate 5, fingerprint pressing plate 6, sealing member 7.

### DETAILED DESCRIPTION

The following embodiments of the disclosure will be described in detail, examples of which are shown in the accompanying drawings, in which the same or similar reference numerals have been used throughout to denote the same or similar elements or elements serving the same or similar functions. The embodiments described below with reference to the accompanying drawings are exemplary only, meaning they are intended to be illustrative of rather than limiting the disclosure.

In the specification of the present disclosure, it is to be understood that terms such as "thickness", "upper", "lower", "front", "rear", "left", "right", "vertical", "horizontal", "top", "bottom", "inner", "outer" and "circumference" refer to the orientations and locational relations illustrated in the drawings, and for describing the present disclosure and for describing in a simple manner, and which are not intended to indicate or imply that the device or the elements are disposed to locate at the specific directions or are structured and performed in the specific directions, which could not to be understood as limiting the present disclosure. In addition, terms such as "first" and "second" are used herein for purposes of description and are not intended to indicate or imply relative importance or significance or to imply the number of indicated technical features. Thus, the feature defined with "first" and "second" may include one or more of such a feature. In the description of the present disclosure, "a plurality of' means two or more than two, unless specified otherwise.

In the present disclosure, unless specified or limited otherwise, terms "mounted", "connected", "coupled" and the like are used in a broad sense, and may include, for example, fixed connections, detachable connections, or integral connections; may also be mechanical or electrical connections; may also be direct connections or indirect connections via intervening structures; may also be inner communications of two elements, as can be understood by those skilled in the art depending on specific contexts.

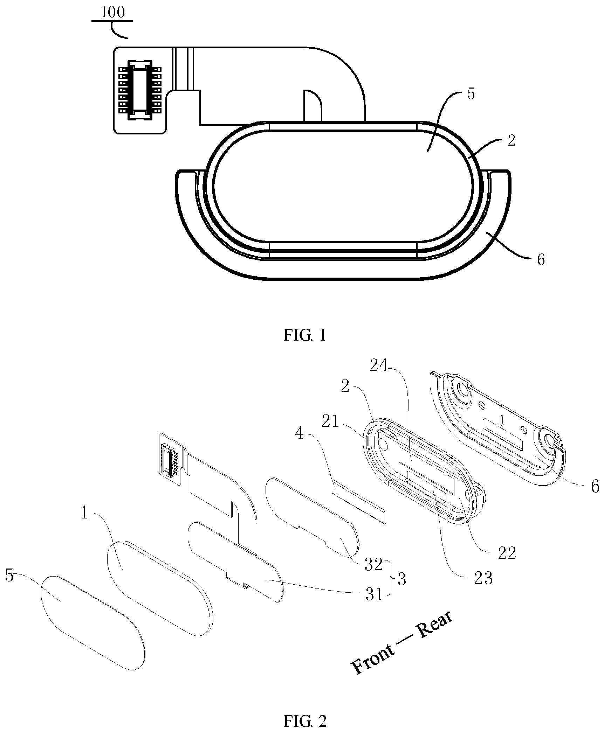

In the following, a fingerprint module 100 provided in embodiments of the present disclosure will be described according to FIGS. 1-4.

Referring to FIGS. 1-4, the fingerprint module 100 according to the embodiment of the present disclosure includes: a fingerprint identification assembly, an encapsulation layer 1, a decorative part 2 and a circuit board assembly 3.

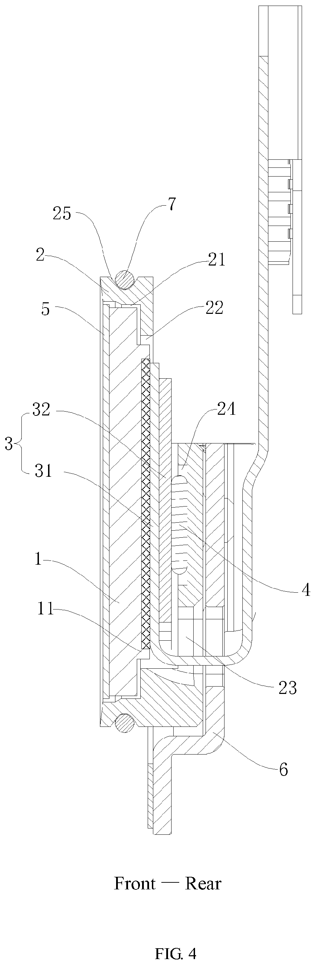

Specifically, the encapsulation layer is configured to encapsulate the fingerprint identification assembly, and a rear wall surface of the encapsulation layer 1 (the rear side as shown in FIG.4) has a first matching part (as the protruding portion 11 described below). The decorative part 2 has an embedded groove 21. The encapsulation layer 1 is embedded in the embedded groove 21. The embedded groove 21 includes a second matching part, and the first matching part is embedded in the second matching part, so that the first matching part and the second matching part could be fitted to each other. Therefore, the encapsulation layer 1 is embedded in the embedded groove 21. The first matching part is embedded in the second matching part, the thickness of the encapsulation layer 1 and the decorative part 2 in the front-rear direction can be reduced, the thickness of the fingerprint module 100 can be reduced, and the ultra-thin design of the mobile terminal can be adapted to meet the user's use requirements.

In the fingerprint module 100 according to the embodiment of the present disclosure, the encapsulation layer 1 is embedded in the embedded groove 21 by providing a first matching part on the rear wall surface of the encapsulation layer 1 and the second matching part in the embedded groove 21 of the decorative part 2. When the first matching part is embedded in the second matching part, the thickness of the encapsulation layer 1 and the decorative part 2 in the front-rear direction can be reduced, so that the thickness of the fingerprint module 100 can be reduced, and the mobile terminal can be adapted to the ultra-thin design to meet the needs of users.

In some embodiments of the present disclosure, as shown in FIGS. 2-4, the first matching part may be a protruding portion 11 formed on the rear wall surface of the encapsulation layer 1 (the rear side as shown in FIG.4), the second matching part may be a recess portion 22 formed in the embedded groove 21, and at least part of the protruding portion 11 may be disposed in the recess portion 22. Therefore, when the encapsulation layer 1 and the decorative part 2 are assembled, at least a portion of the protruding portion 11 may be embedded in the recess portion 22, and the thickness of the decorative part 2 and the encapsulation layer 1 in the front-rear direction can be reduced, thereby reducing the thickness of the fingerprint module 100 can be adapted to the ultra-thin design of the mobile terminal to meet the user's use requirements.

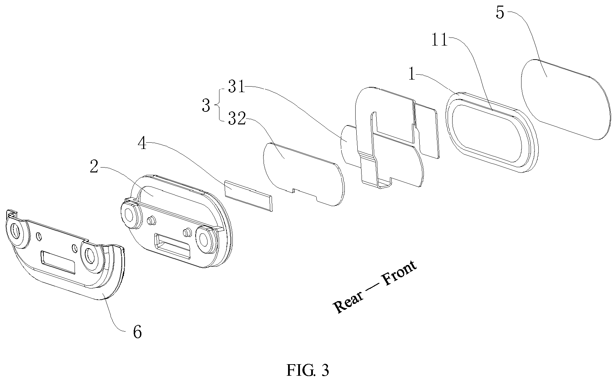

For example, as the embodiment shown in FIGS. 3 and 4, the rear wall surface of the encapsulation layer 1 may have the first matching part, the first matching part may be formed as the protruding portion 11, the decorative part 2 may define the embedded groove 21, the encapsulation layer 1 may be disposed in the embedded groove 21, and the bottom wall of the embedded groove 21 may be provided with the second matching part formed as a recess portion 22, and the protruding portion 11 may be located in the recess portion 22. The side wall surface of the protruding portion 11 and the rear wall surface of the encapsulation layer 1 may form a first stepped surface, and the bottom wall of the embedded groove 21 and the side wall of the recess portion 22 may form a second stepped surface, and the first stepped surface and the second stepped surface may be engaged. Thus, the displacement of the encapsulation layer 1 relative to the decoration component 2 in the rear direction could be limited, thereby ensuring the reliability of the operation of the fingerprint module 100. And when the thickness of the protruding portion 11 in the front-rear direction may be a, the overall thickness of the fingerprint module 100 can be reduced by a.

Specifically, as shown in FIG. 3, the number of the protruding portion 11 may be one. Thereby, the structure and processing technology of the encapsulation layer 1 can be simplified, the production cycle may be saved, and the production cost may be reduced. For example, in the embodiment shown in FIG. 3, the rear wall surface of the encapsulation layer 1 may be provided with the protruding portion 11 which may be one and located at the center of the encapsulation layer 1. When the encapsulation layer 1 may be processed, the encapsulation layer 1 having the same thickness can be processed first, and then a step may be processed in the circumferential direction of the rear wall surface of the encapsulation layer 1.

In some embodiments of the present disclosure, as shown in FIG. 4, an end of the circuit board assembly 3 may pass through the decorative part 2, extend into the recess portion 22 and may be attached to a free end surface of the protruding portion 11 (i.e. the rear wall surface of the protruding portion 11). For example, as the embodiments shown in FIGS. 2-4, the bottom wall of the recess portion 22 may be provided with a through hole 23, the end of the circuit board assembly 3 may pass through the through hole 23 on the decorative part 2 and extend into the recess portion 22, and the end of the circuit board assembly 3 extended into the recess portion 22 may be attached to the free end surface of the protruding portion 11. When the circuit board assembly 3 is attached to the free end surface of the protruding portion 11, on one hand, the protruding portion 11 can protect the circuit board assembly 3, prevent the impurities in the air from corroding the circuit to cause electrical performance degradation, and on the other hand, the tight connection between the fingerprint identification assembly in the encapsulation layer 1 and the circuit board assembly 3 can be ensured, and the reliability of the operation of the fingerprint module 100 may be ensured.

In some embodiments, a ground terminal may be disposed on the circuit board assembly 3. The decorative part 2 may be a conductive decorative member, and the decorative part 2 may be electrically connected to the ground terminal through the circuit board assembly 3. Therefore, the purpose of grounding the decorative part 2 may be achieved by the ground terminal, and the static electricity of the decorative part 2 may be prevented from adversely affecting the fingerprint module 100. It should be noted that the static electricity may be generated when the decorative part 2 may be touched by objects, or the decorative part 2 may be in the friction process, and the generated static electricity has a bad influence on the fingerprint module 100.

Furthermore, as shown in FIGS. 2-4, a conductive component 4 may be sandwiched between the circuit board assembly 3 and the bottom wall of the recess portion 22. Therefore, the electrical connection between the circuit board assembly 3 and the decorative part 2 could be indirectly achieved, the structural arrangement between the circuit board assembly 3 and the decorative part 2 can be made more reasonable.

Moreover, as shown in FIGS. 2-4, the bottom wall of the recess portion 22 may be provided with a mounting slot 24, the conductive component 4 may be embedded in the mounting slot 24. The mounting slot 24 can limit the conductive component 4 to prevent the conductive component 4 from moving on the bottom wall of the recess portion 22, thereby, the reliability of the connection between the conductive component 4 and the bottom wall of the recessed portion 22 and between the conductive component 4 and the circuit board assembly 3 can be ensured.

In some embodiments, the conductive component 4 may be a conductive foam. The conductive foam may be a conductive cloth wrapped on a flame-retardant sponge. After a series of processes, the conductive foam may have good surface conductivity and can be easily fixed on devices that may require shielding with an adhesive tape. The conductive foam may be low in cost, simple in processing, and can ensure the reliability of grounding. When the circuit board assembly 3 may be assembled with the decorative part 2, the conductive foam between the circuit board assembly 3 and the decorative part 2 may have a certain amount of compression to ensure the reliability of connection between the conductive foam and the decorative part 2, thereby ensuring good grounding of the decorative part 2 and preventing the static electricity of the decorative part 2 from adversely affecting the fingerprint module 100.

In some embodiments of the present disclosure, as shown in FIGS. 2 and 4, the circuit board assembly 3 includes:
a flexible circuit board 31 and a reinforcing plate 32. An end of the flexible circuit board 31 may extend into the recess portion 22, and be attached to the free end surface of the protruding portion 11 (as the rear end surface of the protruding portion 11 shown in FIG. 4). On one hand, the protruding portion 11 can protect the flexible circuit board 31, and prevent the impurities in the air from corroding the circuit to cause electrical performance degradation, and on the other hand, the tight connection between the fingerprint identification assembly in the encapsulation layer 1 and the flexible circuit board 31 can be ensured, and the reliability of the operation of the fingerprint module 100 may be ensured. The grounding terminal may be disposed on the flexible circuit board 31, the reinforcing plate 32 may be attached to the flexible circuit board 31 and electrically connected to the flexible circuit board 31, and the reinforcing plate 32 may be attached to the side of the flexible circuit board 31 away from the encapsulation layer 1 (the rear side as shown in FIG. 4), the conductive component 4 may be electrically connected to the reinforcing plate 32 (i.e., the reinforcing plate 32 may be a conductive element). The reinforcing plate 32 can strengthen the structural strength of the flexible circuit board 31 and prevent the flexible circuit board 31 from being bent and damaged. Therefore the reliability of the operation of the flexible circuit board 31 could be ensured. At the same time, the decorative part 2 may be connected to the flexible circuit board 31 through the reinforcing plate 32 and the conductive component 4. Therefore, the electrical connection between the decorative part 2 and the grounding terminal through the flexible circuit board 31 can be realized so as to avoid the adverse effect of the static electricity of the decorative part 2 on the fingerprint module 100.

In some embodiments of the present disclosure, as shown in FIG. 4, an outer peripheral wall of the decorative part 2 may be covered with a sealing member 7. When the fingerprint module 100 is mounted on a mobile terminal such as a mobile phone, it could prevent the sweat or other liquid on the hand from intruding into the interior of the mobile terminal and damaging the components inside the mobile terminal, thereby ensuring the reliability of the operation of the mobile terminal.

Furthermore, as shown in FIG. 4, the outer peripheral wall of the decorative part 2 may include a sealing groove 25, and the sealing member 7 may be embedded in the sealing groove 25. Therefore, the sealing member 7 can be prevented from being tilted in the axial direction of the decorative part 2 (front-rear direction as shown in FIG. 4) to ensure the reliability of the sealing.

In some embodiments of the present disclosure, as shown in FIGS. 2 and 4, the fingerprint module 100 may further include a cover plate 5, the cover plate 5 may be embedded in the embedded groove 21 and located at a front side of the encapsulation layer 1 (the front side as shown in FIG. 4). On the one hand, the cover plate 5 can further protect the fingerprint identification assembly and the circuit board assembly 3, and on the other hand, the cover plate 5 can also increase the aesthetics of the fingerprint module 100.

Selectively, the cover plate 5 may be a glass cover plate or a ceramic cover plate, the glass cover plate or the ceramic cover plate may have high gloss, which can improve the aesthetics of the fingerprint module 100.

The fingerprint module 100 in accordance with one embodiment of the present disclosure may be described below with reference to FIGS. 1-4. The following description may be merely illustrative and may be not intended to limit the disclosure.

As shown in FIGS. 1-4, a fingerprint module 100 according to an embodiment of the present disclosure may include an encapsulation layer 1, a decorative part 2, a circuit board assembly 3, a fingerprint identification assembly and a cover plate 5.

Specifically, as shown in FIGS. 3 and 4, the encapsulation layer 1 is configured to encapsulate the fingerprint identification assembly, a first matching part is disposed on a rear wall surface of the encapsulation layer 1, the first matching part may be a protruding portion 11 formed on the rear wall surface of the encapsulation layer 1, and the number of the protruding portion 11 may be one and located in the middle part of encapsulation layer 1. When the protruding portion 11 is processed, a step can be processed in the circumferential direction of the encapsulating layer 1. The rear wall surface of the encapsulating layer 1 and the side wall surface of the protruding portion 11 may form a first stepped surface. As shown in FIGS. 2 and 4, the decorative part 2 has an embedded groove 21, and the encapsulation layer 1 is disposed in the embedded groove 21. A second matching part is formed in the embedded groove 21, and the second matching part may be a recess portion 22 formed in the embedded groove 21, and the protruding portion 11 may be located in the recess portion 22. The bottom wall of the embedded groove 21 and the side wall of the recess portion 22 may form a second stepped surface, and the first stepped surface may be engaged with the second stepped surface. When the decorative part 2 and the encapsulation layer 1 are assembled, the thickness of the decorative part 2 and the encapsulation layer 1 in the front-rear direction can be reduced, thereby reducing the thickness of the fingerprint module 100 may be able to adapt to the ultra-thin requirements of the mobile terminal.

It should be noted that when the thickness of the protruding portion 11 in the front-rear direction may be a, the overall thickness of the decorative part 2 and the encapsulation layer 1 can be reduced by a. For example, when the thickness of the protruding portion 11 in the front-rear direction may be 0.2 mm, the thickness of the decorative part 2 after being assembled with the encapsulating layer 1 can be reduced by 0.2 mm in the front-rear direction.

As shown in FIGS. 2-4, the circuit board assembly 3 includes a flexible circuit board 31 and a reinforcing plate 32. The bottom wall of the recess portion 22 of the decorative part 2 may be provided with a through hole 23. An end of the flexible circuit board 31 may pass through the through hole 23 and extend into the recess portion 22, the end of the flexible circuit board 31 extended into the recess portion 22 may be attached to the free end surface of the protruding portion 11 (i.e., the rear end surface of the protruding portion 11). On one hand, the encapsulation layer 1 can protect the flexible circuit board 31, prevent the impurities in the air from corroding the flexible circuit board 31 to cause electrical performance degradation, and on the other hand, the tight connection between the fingerprint identification assembly in the encapsulation layer 1 and the flexible circuit board 31 can be ensured, and the reliability of the operation of the fingerprint module 100 may be ensured. The reinforcing plate 32 may be a reinforcing steel plate, and the reinforcing plate 32 may be attached to the side of the flexible circuit board 31 away from the encapsulation layer 1 and electrically connected to the flexible circuit board 31, that is, the reinforcing plate 32 may be attached to the rear side wall of the flexible circuit board 31. The reinforcing plate 32 can strengthen the structural strength of the flexible circuit board 31 and prevent the flexible circuit board 31 from being bent and damaged.

In addition, as shown in FIGS. 2-4, the decorative part 2 is a conductive metal piece, and the other end of the flexible circuit board 31 (the end that does not extend into the recess portion 22) may be provided with a ground terminal. The conductive component 4 may be disposed between the reinforcing plate 32 and the bottom wall of the recess portion 22. The decorative part 2 may be electrically connected to the grounding terminal through the conductive component 4, the reinforcing plate 32 and the flexible circuit board 31. Therefore, the purpose of grounding the decorative part 2 may be achieved, and the static electricity of the decorative part 2 may be prevented from adversely affecting the fingerprint module 100. The conductive component 4 may be a conductive foam, and the cross section of the conductive foam may be rectangular. The bottom wall of the recess portion 22 may be provided with a mounting slot 24 having a rectangular cross section, and the conductive foam may be embedded in the mounting slot 24. Therefore, the conductive foam can be prevented from moving, thereby ensuring the reliability of the electrical connection between the decorative part 2 and the flexible circuit board 31.

As shown in FIG. 4, the cover plate 5 may be a glass cover plate which may be disposed in the embedded groove 21 and located on the front side of the encapsulation layer 1, and the cover plate 5 can block the front side opening of the embedded groove 21. The cover plate 5 not only further protects the circuit board assembly 3, but also increases the aesthetics of the fingerprint module 100.

As shown in FIG. 4, the outer peripheral wall of the decorative part 2 may be sleeved with the sealing member 7 embedded in the sealing groove 25 on the outer peripheral wall of the decorative part 2. When the fingerprint module 100 is mounted on a mobile terminal such as a mobile phone, it could prevent the sweat or other liquid on the hand from intruding into the interior of the mobile terminal and damaging the components inside the mobile terminal, thereby ensuring the reliability of the operation of the mobile terminal.

As shown in FIGS. 2-4, the fingerprint module 100 may further include a fingerprint pressing plate 6, and the fingerprint pressing plate 6 may be disposed on the rear side of the decorative part 2.

In the process of manufacturing the fingerprint module 100, the cover plate 5, the encapsulation layer 1, the flexible circuit board 31 and the reinforcing plate 32 may be processed together, and then the conductive foam may be pasted into the mounting slot 24 of the decorative part 2. The cover plate 5, the encapsulation layer 1, the flexible circuit board 31 and the reinforcing plate 32 which are processed together may be assembled together by the surrounding dispensing glue and assembled with the decorative part 2 then held in pressure. At the same time, through the gluing assembly, after the glue may be pressed for a certain period of time, the glue may be solidified to ensure good grounding between the reinforcing plate 32 and the decorative part 2 through the certain amount of compression of the conductive foam between the reinforcing plate 32 and the decorative part 2.

The fingerprint module 100 according to the embodiment of the present disclosure may form a protruding portion 11 by processing a step on the rear wall surface of the encapsulation layer 1. By using the protruding portion 11 and the recess portion 22 of the decorative part 2 to be glued and fixed, the thickness in the front-rear direction after the assembly of the encapsulating layer 1 and the decorative part 2 can be reduced, thereby reducing the thickness of the fingerprint module 100.

The mobile terminal according to an embodiment of the disclosure may include the above fingerprint module 100.

The mobile terminal according to an embodiment of the disclosure could meet the ultra-thin requirements of the mobile terminal by setting the above fingerprint module 100 to reduce the thickness of the mobile terminal.

In some embodiments of the present disclosure, the mobile terminal may be mobile phone, a tablet computer or a notebook computer, etc., when the above fingerprint module 100 is used in a mobile phone, a tablet computer or a notebook computer, the thickness can be reduced to meet the ultra-thin requirements.

The scope of the invention is defined by the appended claims.

## Claims

1. A fingerprint module (100), comprising a fingerprint identification assembly;
an encapsulation layer (1), configured to encapsulate the fingerprint identification assembly and comprising a rear wall surface having a first matching part;
a decorative part (2), defining an embedded groove (21) and comprising a second matching part in the embedded groove (21); and
a circuit board assembly (3) comprising a flexible circuit board (31) and a reinforcing plate (32);
wherein the encapsulation layer (1) is embedded in the embedded groove (21), the first matching part is embedded in the second matching part; an end of the flexible circuit board (31) is partially received in the second matching part, and the end of the flexible circuit board (31) has one surface positioned in the second matching part and attached to the first matching part and another opposite surface going beyond a surface of the decorative part (2).

2. The fingerprint module (100) of claim 1, wherein the first matching part is a protruding portion (11) formed on the rear wall surface of the encapsulation layer (1), the second matching part is a recess portion (22) defined in the embedded groove (21), and at least part of the protruding portion (11) is embedded in the recess portion (22).

3. The fingerprint module (100) of claim 2, wherein a side wall surface of the protruding portion (11) and the rear wall surface of the encapsulation layer (1) form a first stepped surface, and a bottom wall of the embedded groove (21) and a side wall of the recess portion (22) form a second stepped surface, and the first stepped surface is engaged with the second stepped surface.

4. The fingerprint module (100) of claim 2, wherein the protruding portion (11) is located at the center of the encapsulation layer (1).

5. The fingerprint module (100) of claim 2, wherein the end of the flexible circuit board (31) passes through the decorative part (2) and extends into the recess portion (22), and the end of the flexible circuit board (31) is attached to a free end surface of the protruding portion (11) facing the recess portion (22), such that the circuit board assembly (3) is electrically connected to the fingerprint identification assembly.

6. The fingerprint module (100) of claim 5, wherein a through hole (23) is defined in the decorative part (2), the end of the flexible circuit board (31) passes through the through hole (23) and extends through the through hole (23) into the recess portion (22).

7. The fingerprint module (100) of claim 5, wherein a ground terminal is disposed on the circuit board assembly (3), the decorative part (2) is a conductive decorative member, and the decorative part (2) is electrically connected to the ground terminal through the circuit board assembly (3).

8. The fingerprint module (100) of claim 7, wherein a conductive component (4) is sandwiched between the circuit board assembly (3) and a bottom wall of the recess portion (22) to electrically connect to the decorative part (2) and the circuit board assembly (3).

9. The fingerprint module (100) of claim 8, wherein the bottom wall of the recess portion (22) defines a mounting slot (24), and the conductive component (4) is embedded in the mounting slot (24).

10. The fingerprint module (100) of claim 8, wherein the ground terminal is disposed on the flexible circuit board (31); and the reinforcing plate (32) is attached to a side of the flexible circuit board (31) away from the encapsulation layer (1) and electrically connected to the flexible circuit board (31), and the conductive component (4) is electrically connected to the reinforcing plate (32).

11. The fingerprint module (100) of any one of claims 1 to 10, wherein an outer peripheral wall of the decorative part (2) is covered with a sealing member (7).

12. The fingerprint module (100) of claim 11, wherein the outer peripheral wall of the decorative part (2) defines a sealing groove (25), the sealing member (7) is embedded in the sealing groove (25).

13. The fingerprint module (100) of any one of claims 1 to 12, further comprising a cover plate (5), wherein the cover plate (5) is embedded in the embedded groove (21) and located in a front side of the encapsulation layer (1).

14. The fingerprint module (100) of any one of claims 1-13, further comprising a fingerprint pressing plate (6), wherein the fingerprint pressing plate (6) is disposed on a rear side of the decorative part (2).

15. A mobile terminal, comprising the fingerprint module (100) of any one of claims 1 to 14.

## Patentansprüche

1. Fingerabdruckmodul (100), das eine Fingerabdruckidentifikationsanordnung umfasst;
eine Kapselungsschicht (1), die dazu ausgelegt ist, die Fingerabdruckidentifikationsanordnung zu kapseln, und eine Rückwandfläche mit einem ersten passenden Teil umfasst;
ein dekoratives Teil (2), das eine eingebettete Nut (21) definiert und ein zweites passendes Teil in der eingebetteten Nut (21) umfasst; und
eine Leiterplattenanordnung (3), die eine flexible Leiterplatte (31) und eine Verstärkungsplatte (32) umfasst;
wobei die Kapselungsschicht (1) in die eingebettete Nut (21) eingebettet ist, das erste passende Teil in das zweite passende Teil eingebettet ist; ein Ende der flexiblen Leiterplatte (31) teilweise in das zweite passende Teil aufgenommen ist und das Ende der flexiblen Leiterplatte (31) eine Fläche, die im zweiten passenden Teil positioniert und am ersten passenden Teil befestigt ist, und eine andere gegenüberliegende Fläche, die über eine Fläche des dekorativen Teils (2) hinausgeht, aufweist.

2. Fingerabdruckmodul (100) nach Anspruch 1, wobei das erste passende Teil ein vorstehender Abschnitt (11) ist, der auf der Rückwandfläche der Kapselungsschicht (1) gebildet ist, das zweite passende Teil ein Ausnehmungsabschnitt (22) ist, der in der eingebetteten Nut (21) definiert ist, und mindestens ein Teil des vorstehenden Abschnitts (11) in den Ausnehmungsabschnitt (22) eingebettet ist.

3. Fingerabdruckmodul (100) nach Anspruch 2, wobei eine Seitenwandfläche des vorstehenden Abschnitts (11) und die Rückwandfläche der Kapselungsschicht (1) eine erste abgestufte Fläche bilden und eine Bodenwand der eingebetteten Nut (21) und eine Seitenwand des Ausnehmungsabschnitts (22) eine zweite abgestufte Fläche bilden und die erste abgestufte Fläche in die zweite abgestufte Fläche eingreift.

4. Fingerabdruckmodul (100) nach Anspruch 2, wobei sich der vorstehende Abschnitt (11) in der Mitte der Kapselungsschicht (1) befindet.

5. Fingerabdruckmodul (100) nach Anspruch 2, wobei das Ende der flexiblen Leiterplatte (31) durch das dekorative Teil (2) verläuft und sich in den Ausnehmungsabschnitt (22) erstreckt und das Ende der flexiblen Leiterplatte (31) an einer freien Endfläche des vorstehenden Abschnitts (11), der dem Ausnehmungsabschnitt (22) zugewandt ist, befestigt ist, derart, dass die Leiterplattenanordnung (3) mit der Fingerabdruckidentifikationsanordnung elektrisch verbunden ist.

6. Fingerabdruckmodul (100) nach Anspruch 5, wobei im dekorativen Teil (2) ein Durchgangsloch (23) definiert ist, das Ende der flexiblen Leiterplatte (31) durch das Durchgangsloch (23) verläuft und sich durch das Durchgangsloch (23) in den Ausnehmungsabschnitt (22) erstreckt.

7. Fingerabdruckmodul (100) nach Anspruch 5, wobei auf der Leiterplattenanordnung (3) ein Masseanschluss angeordnet ist, das dekorative Teil (2) ein leitfähiges dekoratives Element ist und das dekorative Teil (2) über die Leiterplattenanordnung (3) elektrisch mit dem Masseanschluss verbunden ist.

8. Fingerabdruckmodul (100) nach Anspruch 7, wobei zwischen der Leiterplattenanordnung (3) und einer Bodenwand des Ausnehmungsabschnitts (22) eine leitfähige Komponente (4) eingeschlossen ist, um mit dem dekorativen Teil (2) und der Leiterplattenanordnung (3) elektrisch verbunden zu sein.

9. Fingerabdruckmodul (100) nach Anspruch 8, wobei die Bodenwand des Ausnehmungsabschnitts (22) einen Montageschlitz (24) definiert und die leitfähige Komponente (4) in den Montageschlitz (24) eingebettet ist.

10. Fingerabdruckmodul (100) nach Anspruch 8, wobei der Masseanschluss auf der flexiblen Leiterplatte (31) angeordnet ist und
die Verstärkungsplatte (32) an einer Seite der flexiblen Leiterplatte (31) von der Kapselungsschicht (1) weg befestigt und mit der flexiblen Leiterplatte (31) elektrisch verbunden ist und die leitfähige Komponente (4) elektrisch mit der Verstärkungsplatte (32) verbunden ist.

11. Fingerabdruckmodul (100) nach einem der Ansprüche 1 bis 10, wobei eine Außenumfangswand des dekorativen Teils (2) mit einem Dichtungselement (7) abgedeckt ist.

12. Fingerabdruckmodul (100) nach Anspruch 11, wobei die Außenumfangswand des dekorativen Teils (2) eine Dichtungsnut (25) definiert, das Dichtungselement (7) in die Dichtungsnut (25) eingebettet ist.

13. Fingerabdruckmodul (100) nach einem der Ansprüche 1 bis 12, das ferner eine Abdeckplatte (5) umfasst, wobei die Abdeckplatte (5) in die eingebettete Nut (21) eingebettet ist und sich auf einer Vorderseite der Kapselungsschicht (1) befindet.

14. Fingerabdruckmodul (100) nach einem der Ansprüche 1-13, das ferner eine Fingerabdruckdruckplatte (6) umfasst, wobei die Fingerabdruckdruckplatte (6) auf einer Rückseite des dekorativen Teils (2) angeordnet ist.

15. Mobiles Endgerät, das das Fingerabdruckmodul (100) nach einem der Ansprüche 1 bis 14 umfasst.

## Revendications

1. Module d'empreinte digitale (100), comprenant un ensemble d'identification d'empreinte digitale ;
une couche d'encapsulation (1), configurée pour encapsuler l'ensemble d'identification d'empreinte digitale et comprenant une surface de paroi arrière ayant une première partie de mise en correspondance ;
une partie décorative (2), définissant une rainure incorporée (21) et comprenant une seconde partie de mise en correspondance dans la rainure incorporée (21) ; et
un ensemble de carte de circuit imprimé (3) comprenant une carte de circuit imprimé souple (31) et une plaque de renforcement (32) ;
la couche d'encapsulation (1) étant incorporée dans la rainure incorporée (21), la première partie de mise en correspondance étant incorporée dans la seconde partie de mise en correspondance ; une extrémité de la carte de circuit imprimé souple (31) étant partiellement reçue dans la seconde partie de mise en correspondance, et l'extrémité de la carte de circuit imprimé souple (31) ayant une surface positionnée dans la seconde partie de mise en correspondance et fixée à la première partie de mise en correspondance et une autre surface opposée allant au-delà d'une surface de la partie décorative (2).

2. Module d'empreinte digitale (100) selon la revendication 1, la première partie de mise en correspondance étant une partie saillante (11) formée sur la surface de paroi arrière de la couche d'encapsulation (1), la seconde partie de mise en correspondance étant une partie en creux (22) définie dans la rainure incorporée (21), et au moins une partie de la partie saillante (11) étant incorporée dans la partie en creux (22).

3. Module d'empreinte digitale (100) selon la revendication 2, une surface de paroi latérale de la partie saillante (11) et la surface de paroi arrière de la couche d'encapsulation (1) formant une première surface étagée, et une paroi de fond de la rainure incorporée (21) et une paroi latérale de la partie en creux (22) formant une seconde surface étagée, et la première surface étagée étant en prise avec la seconde surface étagée.

4. Module d'empreinte digitale (100) selon la revendication 2, la partie saillante (11) étant située au centre de la couche d'encapsulation (1).

5. Module d'empreinte digitale (100) selon la revendication 2, l'extrémité de la carte de circuit imprimé souple (31) passant à travers la partie décorative (2) et s'étendant dans la partie en creux (22), et l'extrémité de la carte de circuit imprimé souple (31) étant fixée à une surface d'extrémité libre de la partie en saillie (11) faisant face à la partie en creux (22), de telle sorte que l'ensemble de carte de circuit imprimé (3) est connecté électriquement à l'ensemble d'identification d'empreinte digitale.

6. Module d'empreinte digitale (100) selon la revendication 5, un trou traversant (23) étant défini dans la partie décorative (2), l'extrémité de la carte de circuit imprimé souple (31) passant à travers le trou traversant (23) et s'étendant à travers le trou traversant (23) dans la partie en creux (22).

7. Module d'empreinte digitale (100) selon la revendication 5, une borne de masse étant disposée sur l'ensemble de carte de circuit imprimé (3), la partie décorative (2) étant un élément décoratif conducteur, et la partie décorative (2) étant connectée électriquement à la borne de masse par l'intermédiaire de l'ensemble de carte de circuit imprimé (3).

8. Module d'empreinte digitale (100) selon la revendication 7, un composant conducteur (4) étant pris en sandwich entre l'ensemble de carte de circuit imprimé (3) et une paroi inférieure de la partie en creux (22) pour se connecter électriquement à la partie décorative (2) et à l'ensemble de carte de circuit imprimé (3).

9. Module d'empreinte digitale (100) selon la revendication 8, la paroi inférieure de la partie en creux (22) définissant une fente de montage (24), et le composant conducteur (4) étant incorporé dans la fente de montage (24).

10. Module d'empreinte digitale (100) selon la revendication 8, la borne de masse étant disposée sur la carte de circuit imprimé souple (31) ; et
la plaque de renforcement (32) étant fixée à un côté de la carte de circuit imprimé souple (31) éloigné de la couche d'encapsulation (1) et connectée électriquement à la carte de circuit imprimé souple (31), et le composant conducteur (4) étant connecté électriquement à la plaque de renforcement (32).

11. Module d'empreinte digitale (100) selon l'une quelconque des revendications 1 à 10, une paroi périphérique extérieure de la partie décorative (2) étant recouverte d'un élément d'étanchéité (7).

12. Module d'empreinte digitale (100) selon la revendication 11, la paroi périphérique extérieure de la partie décorative (2) définissant une rainure d'étanchéité (25), l'élément d'étanchéité (7) étant incorporé dans la rainure d'étanchéité (25).

13. Module d'empreinte digitale (100) selon l'une quelconque des revendications 1 à 12, comprenant en outre une plaque de couverture (5), la plaque de couverture (5) étant incorporée dans la rainure incorporée (21) et située dans un côté avant de la couche d'encapsulation (1).

14. Module d'empreinte digitale (100) selon l'une quelconque des revendications 1 à 13, comprenant en outre une plaque de pression d'empreinte digitale (6), la plaque de pression d'empreinte digitale (6) étant disposée sur un côté arrière de la partie décorative (2).

15. Terminal mobile, comprenant le module d'empreinte digitale (100) selon l'une quelconque des revendications 1 à 14.
